(19) Europäisches Patentamt
European Patent Office
Office européen des brevets

(11) **EP 2 711 570 A2**

(12) **EUROPÄISCHE PATENTANMELDUNG**

(43) Veröffentlichungstag:
26.03.2014 Patentblatt 2014/13

(51) Int Cl.:
***F16C 33/46*** *(2006.01)*

(21) Anmeldenummer: 13180240.7

(22) Anmeldetag: 13.08.2013

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **19.09.2012 DE 102012216810**

(71) Anmelder: **Aktiebolaget SKF
41550 Göteborg (SE)**

(72) Erfinder: **Weidinger, Alfred
97464 Niederwerrn (DE)**

(74) Vertreter: **Schonecke, Mitja
SKF GmbH
Gunnar-Wester-Straße 12
97421 Schweinfurt (DE)**

(54) **Verfahren zur Herstellung eines Wälzlagerkäfigs**

(57) Ein Verfahren 100 zur Herstellung eines Wälzlagerkäfigs mit zumindest einem Käfigring und einer Mehrzahl von Käfigstegen, die sich an den Käfigring anschließen, umfasst ein Bereitstellen 110 eines zumindest teilweise ausgeformten Wälzlagerkäfigs. Ferner umfasst das Verfahren 100 ein Aufbringen 120 eines definierten Drucks auf eine in radialer Richtung innenliegende und/ oder eine in radialer Richtung außenliegende Fläche des Käfigrings, um ein Material des Käfigrings in einem oberflächennahen Bereich zu verdichten.

FIG. 8

EP 2 711 570 A2

**Beschreibung**

Ausführungsbeispiele beziehen sich auf Lager für bewegliche Maschinenteile und insbesondere auf ein Verfahren zur Herstellung eines Wälzlagerkäfigs.

Im Maschinen- und Gerätebau werden Lager zum Führen gegeneinander beweglicher Bauteile verwendet. Diese Lager ermöglichen Bewegungen in erwünschten Richtungen und verhindern Bewegungen in unerwünschten Richtungen. Je nach angewandtem Wirkungsprinzip wird zwischen Gleit- und Wälzlagern unterschieden. Bei Wälzlagern befinden sich Wälzkörper zwischen den gegeneinander beweglichen Teilen.

Es gibt Wälzlager in sehr vielen unterschiedlichen Ausführungsformen. Die meisten dieser Ausführungsformen haben als Grundelemente einen Innenring und einen Außenring mit dazwischenliegenden Wälzkörpern. Diese Wälzkörper werden meist durch einen Käfig in ihrer Position relativ zueinander gehalten.

Die Käfige in Wälzlagern sind in schneller Folge kleinen wechselnden Belastungen ausgesetzt. Dies führt zu einer begrenzten Dauerfestigkeit. Die Erhöhung der Dauerfestigkeit kann beispielsweise durch vergrößerte Abmessungen der Käfigringe und/oder durch höherwertigere Materialien erreicht werden. Dies führt jedoch zu erhöhten Kosten und/oder erhöhtem Gewicht des Lagers.

Es besteht daher der Bedarf, ein verbessertes Konzept zur Herstellung eines Wälzlagerkäfigs zu schaffen, das es ermöglicht, die Dauerfestigkeit des Käfigs zu erhöhen.

Dieser Bedarf wird durch ein Verfahren zur Herstellung eines Wälzlagerkäfigs gemäß Anspruch 1 gedeckt.

Ein Verfahren zur Herstellung eines Wälzlagerkäfigs mit zumindest einem Käfigring und einer Mehrzahl von Käfigstegen, die sich an den Käfigring anschließen, gemäß eines Ausführungsbeispiels umfasst ein Bereitstellen eines zumindest teilweise ausgeformten Wälzlagerkäfigs. Ferner umfasst das Verfahren ein Aufbringen eines definierten Drucks auf eine in radialer Richtung innenliegende und/oder eine in radialer Richtung außenliegende Fläche des Käfigrings, um ein Material des Käfigrings in einem oberflächennahen Bereich zu verdichten.

Ausführungsbeispielen liegt die Erkenntnis zugrunde, dass eine Druckspannung im oberflächennahen Bereich eines Käfigrings dazu führt, dass im Käfigring im Betrieb geringere Zugspannungen auftreten, was zur Erhöhung der Dauerfestigkeit des Käfigs führt. Zusätzlich kann beispielsweise durch das Aufbringen des definierten Drucks die Oberfläche des Käfigrings geglättet werden, so dass die Gefahr der Rissentstehung reduziert werden kann. Durch die Glättung der Führungsflächen des Käfigrings kann auch die Reibung zwischen Käfig und Führungsringfläche reduziert werden. Dadurch können zusätzlich zur Verbesserung der Dauerfestigkeit höhere Gleitgeschwindigkeiten ermöglicht werden.

Bei einigen Ausführungsbeispielen erfolgt das Aufbringen des definierten Drucks durch zumindest eine Druckrolle, die mit dem definierten Druck über die in radialer Richtung innenliegende oder die in radialer Richtung außenliegende Fläche des Käfigrings rollt. Dadurch kann auf einfache Art und Weise das Material des Käfigrings in einem oberflächennahen Bereich verdichtet werden.

Bei einigen anderen Ausführungsbeispielen erfolgt das Aufbringen des definierten Drucks durch ein Überschieben eines zangenartigen Kalibrierwerkzeugs über die in radialer Richtung innenliegende Fläche und die in radialer Richtung außenliegende Fläche. Dabei weist das zangenartige Kalibrierwerkzeug zwei sich gegenüberliegende Gleitflächen mit einem ersten radialen Abstand auf und die in radialer Richtung innenliegende Fläche und die in radialer Richtung außenliegende Fläche des Käfigrings weisen einen zweiten radialen Abstand auf. Durch die Wahl des ersten radialen Abstands kleiner als den zweiten radialen Abstand kann beim Überschieben des zangenartigen Kalibrierwerkzeugs über die in radialer Richtung innenliegende Fläche und die in radialer Richtung außenliegende Fläche der definierte Druck aufgebracht werden. Durch das Kalibrierwerkzeug kann bei hohen Stückzahlen die Aufbringung des definierten Drucks günstig und schnell erfolgen.

Ausführungsbeispiele der vorliegenden Erfindung werden nachfolgend, bezugnehmend auf die beiliegenden Figuren, näher erläutert. Diese zeigen:

Fig. 1 ein Flussdiagramm eines Verfahrens zur Herstellung eines Wälzlagerkäfigs;

Fig. 2 einen schematischen Spannungsverlauf in einem Käfigseitenring;

Fig. 3 eine schematische Darstellung eines Druckspannungsverlaufs in einem Querschnitt durch einen Käfigring;

Fig. 4 eine schematische Darstellung des Aufbringens des definierten Drucks bei einem Zylinderrollenlagerkäfig;

Fig. 5 eine schematische Darstellung des Aufbringens des definierten Drucks bei einem Kugellagerkäfig;

Fig. 6 eine schematische Darstellung des Aufbringens des definierten Drucks bei einem Schrägkugellagerkäfig;

Fig. 7 eine schematische Darstellung des Aufbringens des definierten Drucks bei einem Pendelrollenlagerkäfig oder bei einem zweireihigen Zylinderrollenlagerkäfig;

Fig. 8 eine schematische Darstellung des Aufbringens des definierten Drucks durch Doppelrollen; und

Fig. 9 eine schematische Darstellung des Aufbringens des definierten Drucks durch ein Kalibrierwerkzeug.

Im Folgenden können bei unterschiedlichen, beschriebenen Ausführungsbeispielen teilweise für Objekte und Funktionseinheiten, die gleiche oder ähnliche funktionelle Eigenschaften aufweisen, gleiche Bezugszeichen verwendet werden. Ferner können zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Des Weiteren können optionale Merkmale der verschiedenen Ausführungsbeispiele miteinander kombinierbar oder zueinander austauschbar sein.

Im Folgenden beziehen sich Ausführungsbeispiele hauptsächlich auf Beispiele, bei denen der definierte Druck erst nach vollständiger Ausformung des Wälzlagerkäfigs (z.B. Drehen der Käfigringe und Einbringen der Taschen) aufgebracht wird. Es ist jedoch ebenso möglich, dass der definierte Druck bereits aufgebracht wird, wenn der Wälzlagerkäfig erst teilweise ausgeformt ist (z.B. die Käfigringe bereits gedreht sind, aber die Taschen noch nicht eingebracht sind) und die restliche Ausformung (z.B. das Einbringen der Taschen) erst später erfolgt.

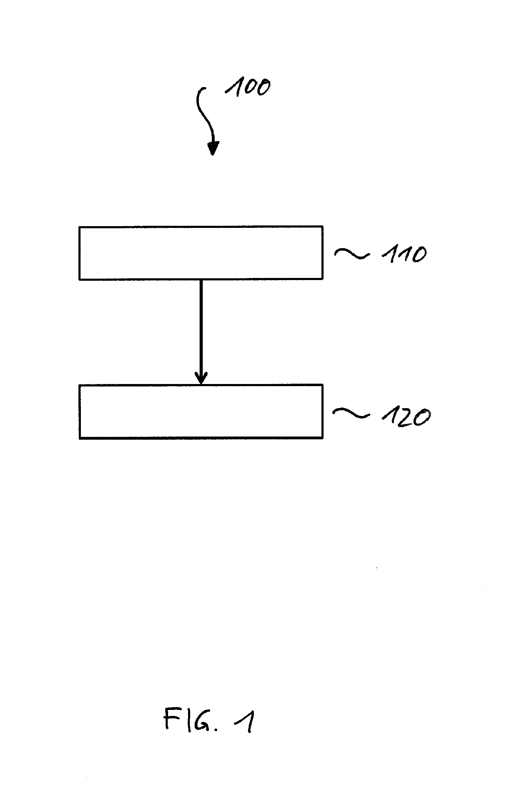

Fig. 1 zeigt ein Flussdiagramm eines Verfahrens 100 zur Herstellung eines Wälzlagerkäfigs gemäß eines Ausführungsbeispiels. Das Verfahren 100 umfasst ein Bereitstellen 110 eines Wälzlagerkäfigs. Dabei weist der Käfig zumindest einen Käfigring und eine Mehrzahl von Käfigstegen, die sich an den Käfigring anschließen, auf. Ferner umfasst das Verfahren 100 ein Aufbringen 120 (oder Ausüben) eines definierten Drucks auf eine in radialer Richtung innenliegende und/oder eine in radialer Richtung außenliegende Fläche des Käfigrings, um ein Material des Käfigrings in einem oberflächennahen Bereich zu verdichten.

Durch das Verdichten des oberflächennahen Bereichs des Käfigs kann eine Druckspannung in dem oberflächennahen Bereich des Käfigrings erzeugt werden, die dazu führt, dass im Käfigring (im Betrieb) geringere Zugspannungen auftreten als ohne eingeprägte Druckspannung, was zur Erhöhung der Dauerfestigkeit führen kann. Zusätzlich kann die Dauerfestigkeit erhöht werden, indem die Gefahr einer Rissentstehung reduziert werden kann, da beim Aufbringen des definierten Drucks die Oberfläche des Käfigrings geglättet werden kann. Die Glättung der Führungsflächen des Käfigrings (innenliegende und/ oder außenliegende Fläche) kann die Reibung zwischen Käfig und Führungsringfläche (am Innenring und/oder Außenring) reduzieren, wodurch sich auch höhere Gleitgeschwindigkeiten und/oder Flächenpressungen realisieren lassen können.

Der definierte Druck kann auf nur eine der beiden in radialer Richtung innenliegende oder in radialer Richtung außenliegende Flächen des Käfigrings aufgebracht werden oder auf die in radialer Richtung innenliegende und die in radialer Richtung außenliegende Fläche aufgebracht werden.

Als oberflächennaher Bereich eines Käfigrings kann ein Bereich des Käfigrings angesehen werden, der sich von der Oberfläche (von der in radialer Richtung innenliegenden Fläche oder von der in radialer Richtung außenliegenden Fläche) des Käfigrings in Richtung der gegenüberliegenden Oberfläche des Käfigrings erstreckt und bis in eine Tiefe reicht, die gleich oder kleiner ist als beispielsweise 50% (oder kleiner als 40%, 30%, 20%, 10% oder 5%) eines radialen mittleren Abstands zwischen innenliegender und außenliegender Fläche des Käfigrings, wobei der radiale mittlere Abstand zwischen innenliegender und außenliegender Fläche des Käfigrings 100% entspricht. Dabei kann für die Bestimmung (der Tiefe) des oberflächennahen Bereichs eine Verdichtung, die weniger als 20% (oder weniger als 10%, 5% oder 1%) einer maximalen Verdichtung beträgt, vernachlässigt werden, wobei die maximale Verdichtung 100% entspricht. Unter einer Verdichtung ist beispielsweise eine Erhöhung der Dichte eines Materials im Vergleich zu einer Dichte vor Aufbringen des definierten Drucks zu verstehen.

Der definierte Druck kann durch Kontakt mit einem (oder mehreren) druckausübenden Bauteilen einer Fertigungsmaschine aufgebracht werden. Der definierte Druck kann für die in radialer Richtung innenliegende Fläche gleich oder unterschiedlich zu dem definierten Druck für die in radialer Richtung außenliegende Fläche des Käfigrings sein, wenn auf beide Flächen ein vordefinierter Druck aufgebracht wird. Beispielsweise kann es für die Dauerfestigkeit vorteilhaft sein, auf die in radialer Richtung innenliegende Fläche einen höheren definierten Druck aufzubringen als auf die in radialer Richtung außenliegende Fläche des Käfigrings.

Optional oder zusätzlich kann der Druck in axialer Richtung über die in radialer Richtung innenliegende und/oder die in radialer Richtung außenliegende Fläche des Käfigrings variieren. So ist es möglich, in axialer Richtung ein definiertes Druckspannungsprofil (oder Verdichtungsprofil) zu erreichen. Es kann für die Dauerfestigkeit z.B. vorteilhaft sein, in axialer Richtung auf eine Seite des Käfigrings, an der sich Käfigstege an den Käfigring anschließen, einen größeren definierten Druck aufzubringen, als auf eine davon abgewandte Seite des Käfigrings. Der definierte Druck kann also ein definierter, konstanter Druck oder ein vordefinierter Druckverlauf sein und für unterschiedliche Flächen des Käfigrings gleich oder unterschiedlich sein.

Der definierte Druck kann beispielsweise so gewählt werden, dass eine im Betrieb über einen radialen Querschnitt summierte Zugsspannung weniger als 20% (oder weniger als 10%, 5% oder 1%) von einer über den radialen Querschnitt summierten Druckspannung (im oberflächennahen Bereich) abweicht, wobei die über den radialen Querschnitt summierte Druckspannung 100% entspricht. Die Zugspannung ist beispielsweise jene Zugspannung, die in einem radialen Querschnitt durch den Käfigring im Betrieb des Wälzlagers bei einer durchschnittlichen oder maximal vorgesehenen Drehzahl auftritt. Alternativ oder optional kann einfach der definierte Druck so hoch gewählt werden, dass die Druckspannung (z.B. maximale oder mittlere Druckspannung) größer ist, als die Zugspannung in der (in radialer Richtung liegende) Mitte des Käfigrings im Betrieb.

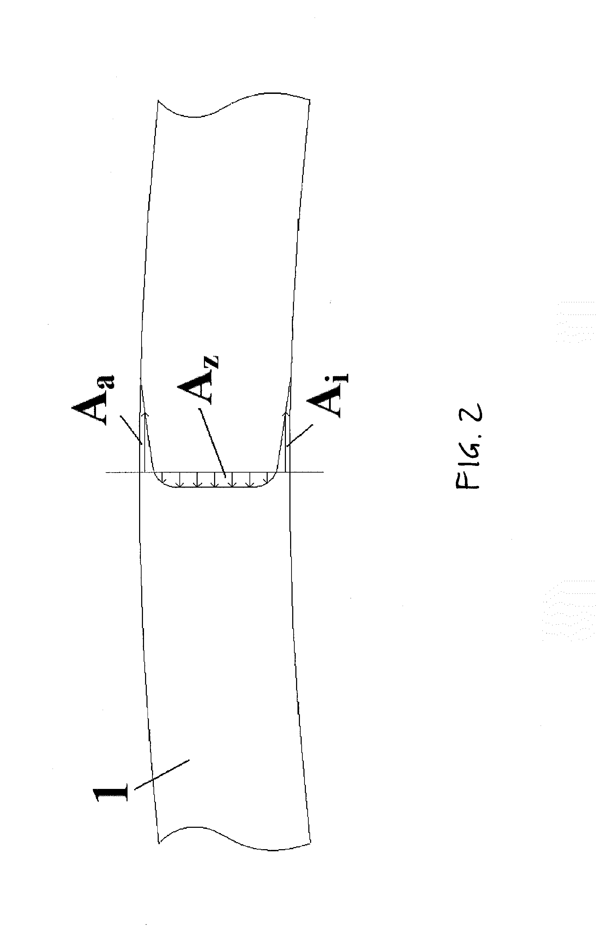

Beispielsweise zeigt Fig. 2 einen Teil eines Käfigrings mit einer schematischen Darstellung der Verteilung der Spannungen über einen radialen Querschnitt des Käfigrings 1. Dabei ist mit $A_a$ die Fläche der Druckspannung außen, mit $A_i$ die Fläche der Druckspannung innen und mit $A_z$ die Fläche der Zugspannung dargestellt. Beispielsweise kann der vordefinierte Druck so gewählt werden, dass

$$A_z = A_a + A_i$$

ist, also die Druckspannungen über den radialen Querschnitt im Wesentlichen gleich groß sind, wie die Zugspannungen.

Die relativ hohen Druckspannungen können beispielsweise durch sehr niedrige Zugspannungen über einen großen radialen Anteil des Käfigrings kompensiert werden. Eine Schwachstelle ist der Seitenring, deswegen können die Druckspannungen in erster Linie in die Seitenringe eingebracht werden.

Das Bereitstellen 110 des Käfigs des Wälzlagers kann beispielsweise das Herstellen (z.B. durch Drehen vor dem Einbringen der Taschen) des Käfigs des Wälzlagers umfassen und optional auch weitere Behandlungsschritte, bevor es zum Aufbringen 120 des definierten Drucks kommt.

Das Aufbringen des definierten Drucks kann auf unterschiedliche Arten erfolgen. Allgemein ausgedrückt kann der Druck durch Kontakt mit einem druckausübenden Bauteil oder mehreren druckausübenden Bauteilen (z.B. wenn auf die innenliegende Fläche und die außenliegende Fläche Druck aufgebracht wird) in einer Fertigungsmaschine (zur Herstellung des Käfigs) aufgebracht oder ausgeübt werden.

Das Aufbringen des definierten Drucks kann beispielsweise durch zumindest eine Druckrolle (als druckausübendes Bauteil) erfolgen, die mit dem definierten Druck über die in radialer Richtung innenliegende oder die in radialer Richtung außenliegende Fläche des Käfigrings rollt. Zusätzlich kann über eine zweite Druckrolle ein definierter Druck auf die jeweils andere Fläche des Käfigrings aufgebracht werden. Optional können auch mehr als eine Druckrolle für die gleiche Fläche des Käfigrings verwendet werden, um das Aufbringen des Drucks zu beschleunigen oder kontinuierlicher zu gestalten.

Die Druckrolle kann für das Aufbringen des definierten Drucks unterschiedlich angeordnet sein. Beispielsweise kann die zumindest eine Druckrolle in Bezug auf den Käfig bei dem Aufbringen des definierten Drucks im Wesentlichen so ausgerichtet sein, dass sich die Rotationsachse der Druckrolle mit der Rotationsachse des Käfigs schneidet oder die Rotationsachse der Druckrolle zu der Rotationsachse des Käfigs parallel verläuft. Dabei ist beispielsweise unter einer Ausrichtung, die im Wesentlichen vorhanden ist, zu verstehen, dass es zu kleinen Abweichungen durch Fertigungstoleranzen oder durch eine leichte Schrägstellung der Druckrolle kommen kann, um die innenliegende oder die außenliegende Fläche mit einem axialen Bewegungsanteil spiralförmig entlang zu rollen. Unter der Rotationsachse des Käfigs ist jene Achse zu verstehen, um die der Käfig im Betrieb im Wälzlager rotiert. Entsprechend ist unter der Rotationsachse der Druckrolle, jene Achse zu verstehen, um die die Druckrolle während des Aufbringens des definierten Drucks rotiert. Ist die Fläche auf die der Druck aufgebracht wird parallel zur Rotationsachse des Käfigs, kann beispielsweise auch die Rotationsachse der Druckrolle parallel zu der Rotationsachse des Käfigs sein.

Optional kann die zumindest eine Druckrolle (aber auch weitere Druckrollen) bei dem Aufbringen des definierten Drucks im Wesentlichen mit konstantem Druck entlang des Umfangs der Fläche des Käfigrings (also in tangentialer Richtung) rollen. Dieser Druck kann sich jedoch beispielsweise bei einer zusätzlichen Bewegung in axialer Richtung (die deutlich geringer sein kann als die Bewegung entlang des Umfangs) ansteigen oder abfallen.

Dabei kann sich entweder die Rotationsachse der Druckrolle um den Käfigring bewegen und der Käfig steht oder der Wälzlagerkäfig dreht sich und die Drehachse der Druckrolle steht. In anderen Worten, zum Aufbringen des definierten Drucks kann entweder der Wälzlagerkäfig still stehen und die Druckrolle bewegt sich um den Wälzlagerkäfig oder die Druckrolle steht still und der Wälzlagerkäfig dreht sich um seine Rotationsachse.

Unabhängig von einem variablen oder konstanten definierten Druck kann die zumindest eine Druckrolle also bei dem Aufbringen des definierten Drucks mit einer tangentialen Geschwindigkeit entlang des Umfangs der Fläche des Käfigrings bewegt werden und dabei mit einer axialen Geschwindigkeit über die Fläche des Käfigrings in Richtung der sich anschließenden Käfigstege bewegt werden. Dabei kann die tangentiale Geschwindigkeit größer als die axiale Geschwindigkeit sein. Für die Dauerfestigkeit kann es vom Vorteil sein, eine axiale Bewegung in Richtung der sich anschließenden Käfigstege durchzuführen, dennoch ist auch eine Bewegung in entgegengesetzter Richtung möglich.

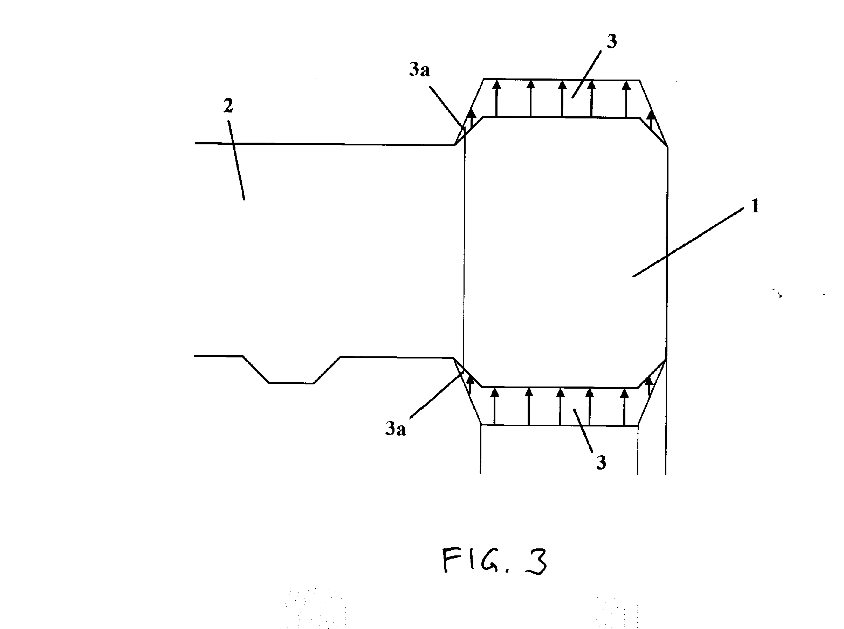

Entsprechend zeigt Fig. 3 einen schematischen Verlauf der Druckspannungen im Querschnitt eines Zylinderrollenlager-Käfig-Seitenrings 1 mit anschließendem Käfigsteg 2. Dabei ist der Druckspannungsverlauf auf der innenliegenden und der außenliegenden Fläche 3 sowie die Druckspannungen im Übergang 3a vom Käfigseitenring 1 auf den Käfigsteg 2 dargestellt.

Wie bereits erwähnt, können auch mehrere Druckrollen gleichzeitig zum Einsatz kommen. Beispielsweise kann für jeden Käfigring des Käfigs zumindest eine Druckrolle für die in radialer Richtung innenliegende Fläche und zumindest eine Druckrolle für die in radialer Richtung außenliegende Fläche verwendet werden, um einen (gleichen oder unterschiedlichen) definierten Druck auf die Flächen aufzubringen.

Optional oder zusätzlich kann eine Druckrolle auf die in radialer Richtung innenliegende Fläche einen höheren definierten Druck aufbringen als eine andere Druckrolle auf die in radialer Richtung außenliegende Fläche. Dadurch kann die Dauerfestigkeit des Käfigs weiter erhöht werden.

Die Druckrolle oder die Druckrollen können unterschiedlich ausgeführt werden. Beispielsweise kann eine den vordefinierten Druck ausübende Oberfläche einer Druckrolle aus Metall, wie z.B. gehärtetem Stahl, bestehen. Es können jedoch auch andere Materialien verwendet werden. Beispielsweise kann es ausreichen, dass eine den vordefinierten Druck ausübende Oberfläche einer Druckrolle aus einem Material besteht, das härter als das Material des Käfigrings ist.

Das Druckrollen erfolgt beispielsweise in axialer Richtung immer zur Käfigtasche (oder zum Käfigsteg oder zur Käfigtasche) hin, um die Druckspannung in dem Übergang 3a vom Käfigring 1 zu Steg 2 zu erhöhen.

Druckspannungen im Übergang 3a vom Käfigring 1 auf Steg 2 können die Kerbspannungen in der Taschenecke reduzieren, was wiederum zu einer Erhöhung der Dauerfestigkeit des Käfigs führen kann.

Das Verrollen oder allgemein das Verfestigen kann zu jedem Fertigungszeitpunkt erfolgen, also auch z.B. am Anfang nach dem Drehen der Ringe und vor dem Einbringen der Taschen.

Alternativ kann das Aufbringen des definierten Drucks beispielsweise durch ein Überschieben eines zangenartigen Kalibrierwerkzeugs über die in radialer Richtung innenliegende Fläche und die in radialer Richtung außenliegende Fläche erfolgen. Das zangenartige Kalibrierwerkzeug kann dabei zwei sich gegenüberliegende Gleitflächen mit einem ersten radialen Abstand aufweisen und die in radialer Richtung innenliegende Fläche und die in radialer Richtung außenliegende Fläche des Käfigrings können einen zweiten radialen Abstand aufweisen. Der erste radiale Abstand kann dann kleiner als der zweite radiale Abstand gewählt werden, so dass beim Überschieben des zangenartigen Kalibrierwerkzeugs über die in radialer Richtung innenliegende Fläche und die in radialer Richtung außenliegende Fläche der definierte Druck aufgebracht wird. Das Kalibrierwerkzeug kann insofern als zangenartig beschrieben werden, da die sich gegenüberliegenden Gleitflächen als Zangenpaar wirken und den Käfigring in Richtung der jeweils andere Gleitfläche drücken.

Das zangenartige Kalibrierwerkzeug kann so ausgebildet sein, dass beim Überschieben jeweils nur auf einen Teil des Umfangs des Käfigrings der definierte Druck aufgebracht wird und so über beispielsweise mehrere Arbeitsschritte der gesamte Umfang des Käfigrings bearbeitet wird. Alternativ kann jedoch das zangenartige Kalibrierwerkzeug so ausgebildet sein, dass in einem Arbeitsschritt der vordefinierte Druck entlang des gesamten Umfangs des Käfigrings aufgebracht werden kann. Beispielsweise kann dies durch ein zangenartiges Kalibrierwerkzeug erfolgen, dass einen zylinderförmigen Innenbereich mit einer inneren Gleitfläche und einen hohlzylinderförmigen Außenbereich mit einer äußeren Gleitfläche (an einer Innenseite des Hohlzylinders) aufweist, so dass zwischen dem Innenbereich und dem Außenbereich ein Hohlraum gebildet ist, um den Käfig beim Überschieben des zangenartigen Kalibrierwerks über einen Käfigring zumindest teilweise aufzunehmen. Dabei kann die innere Gleitfläche beim Überschieben des zangenartigen Kalibrierwerkzeugs über die in radiale Richtung innenliegende Fläche des Käfigrings gleiten und die äußere Gleitfläche beim Überschieben des zangenartigen Kalibrierwerkzeugs über die in radialer Richtung außenliegende Fläche des Käfigrings gleiten.

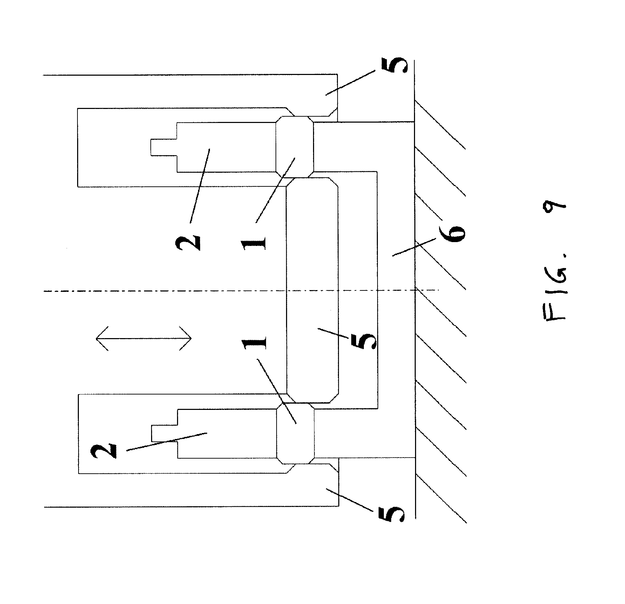

Ein Beispiel für die Druckspannungserzeugung durch Kalibrieren mithilfe eines Kalibrierwerkzeugs 5 ist in Fig. 9 gezeigt. Dabei kann das Kalibrierwerkzeug 5 in axialer Richtung über den Käfigring 1 bis zu einem optional vorhandenen Anschlag 6 geführt werden. Die Stege 2 des Käfigs können dabei in einem Hohlraum des Kalibrierwerkzeugs 5 Platz finden.

Das Kalibrieren kann bei hohen Stückzahlen wirtschaftlich sein, jedoch wird im Übergang 3a (zwischen Käfigring und Steg) weniger Druckspannung erzeugt.

Käfige für Wälzlager können je nach Typ des Wälzlagers, in dem sie eingesetzt werden, unterschiedliche Geometrien, wie z.B. unterschiedliche Anzahl und Form von Käfigringen und Käfigstegen, aufweisen. Das Verfahren zur Herstellung eines Wälzlagerkäfigs kann jedoch unabhängig davon eingesetzt werden.

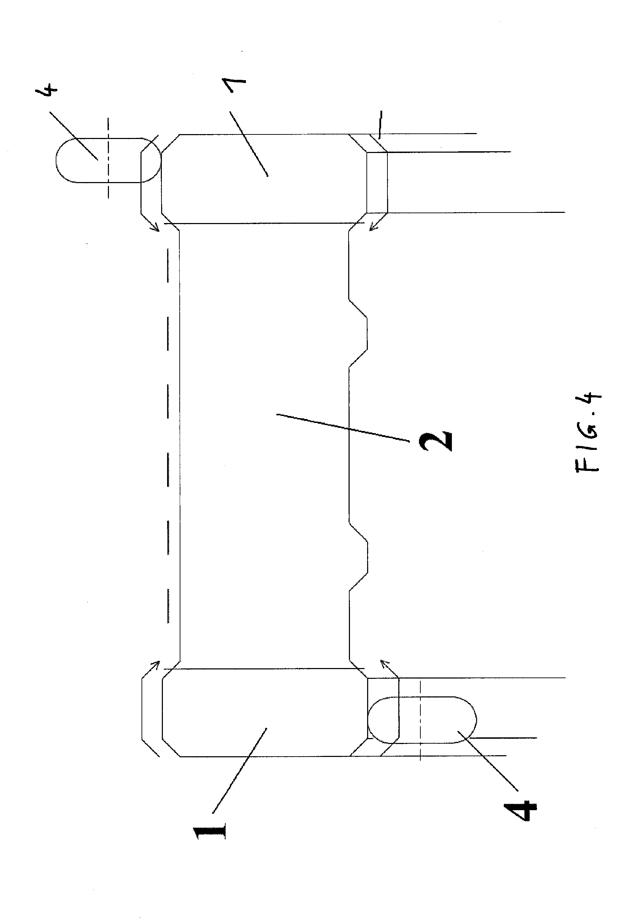

Fig. 4 zeigt beispielsweise schematisch die Druckspannungserzeugung durch Druckrollen 4 bei einem Zylinderrollenlager. Dabei ist ein Querschnitt durch die zwei Seitenringe 1 und einen Steg 2 des Käfigs des Zylinderrollenlagers gezeigt. In dem Beispiel von Fig. 4 wird je eine Druckrolle 4 für die innenliegenden Flächen der Käfigringe und eine weitere Druckrolle 4 für die außenliegenden Flächen der Käfigringe verwendet. Die axiale Bewegung erfolgt dabei beispielsweise, wie durch die Pfeile angedeutet, immer nach innen (in Richtung zu den Käfigstegen hin).

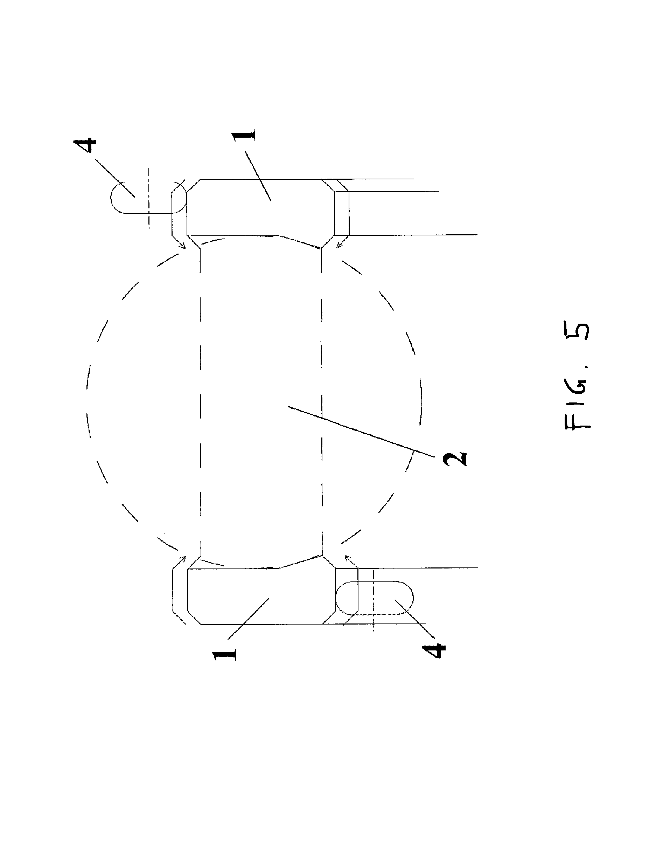

Alternativ zeigt Fig. 5 das Verfahren zur Herstellung eines Wälzlagerkäfigs bei einem Kugellager-Käfig. Wiederum ist ein Querschnitt durch die Seitenringe 1 des Käfigs gezeigt. Sowohl der Steg 2 als auch eine Kugel in einer der Käfigtaschen ist durch eine gestrichelte Linie angedeutet. Ferner gelten auch die zu Fig. 4 sowie zum allgemeinen Herstellungsverfahren gemachten Ausführungen.

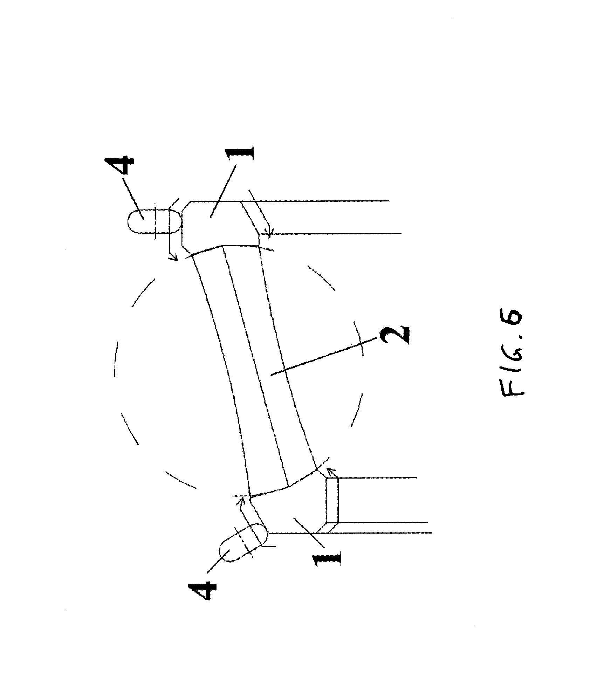

Fig. 6 zeigt alternativ das Verfahren zur Herstellung eines Wälzlagerkäfigs für einen Schrägkugellager-Käfig. Der Schrägkugellager-Käfig umfasst dabei wiederum zwei Seitenringe 1. Ferner gelten die zu den vorherigen Beispielen sowie alle sonstigen zum Verfahren gemachten Ausführungen in entsprechender Weise.

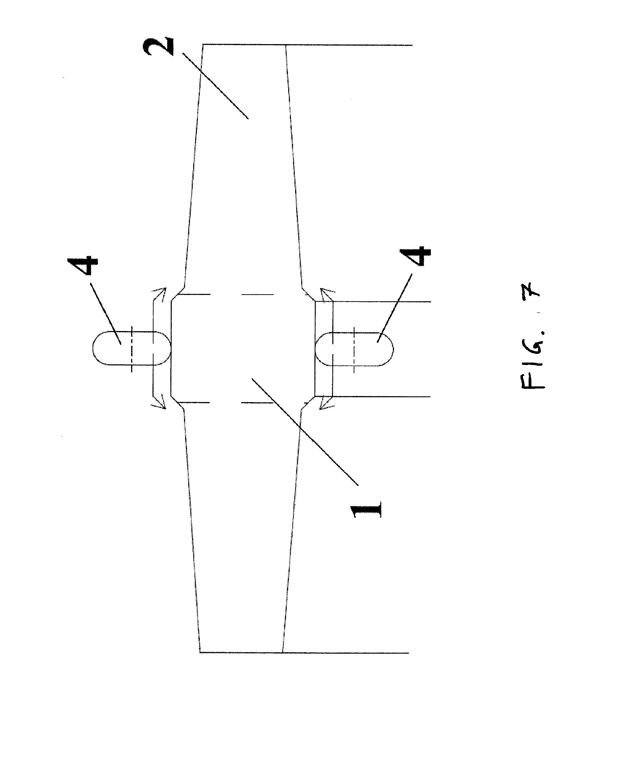

Alternativ zeigt Fig. 7 das Verfahren zur Herstellung eines Wälzlagerkäfigs für einen Pendelrollenlager-Käfig oder einen zweireihigen Zylinderrollenlagerkäfig. Diese Käfige weisen einen Käfigring 1 und daran beidseitig anschließende Stege 2 auf. Ferner werden in diesem Beispiel für die innenliegende Fläche und die außenliegende Fläche je eine Druckrolle 4 verwendet. Zusätzlich gelten die zu den vorherigen Beispielen sowie alle sonstigen zum Verfahren gemachten Ausführungen in entsprechender Weise.

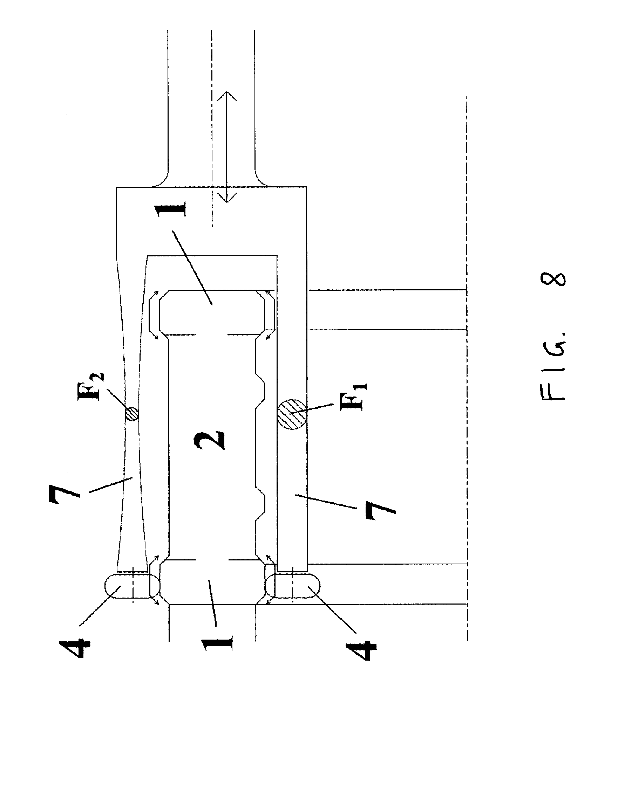

Fig. 8 veranschaulicht eine Möglichkeit, auf die in radialer Richtung innenliegende Fläche und die in radialer Richtung außenliegende Fläche unterschiedliche definierte Drücke aufzubringen. Dazu ist eine erste Druckrolle 4 an einem ersten Federarm 7 eines zangenartigen Bauteils einer Fertigungsmaschine und eine zweite Druckrolle 4 an einem zweiten Federarm 7 des zangenartigen Bauteils der Fertigungsmaschine befestigt. Der erste Federarm 7 drückt die erste Druckrolle 4 mit einer ersten Kraft $F_1$ gegen die in radialer Richtung innenliegende Fläche des Käfigrings 1, um einen ersten definierten Druck auf die innenliegende Fläche aufzubringen. Gleichzeitig drückt der zweite Federarm 7 die zweite Druckrolle 4 mit einer zweiten Kraft $F_2$ gegen die in radialer Richtung außenliegende Fläche des Käfigrings 1, so dass ein zweiter definierter Druck auf die außenliegende Fläche ausgeübt wird. Beispielsweise können durch unterschiedliche Federarmquerschnitte gleichzeitig bedarfsgerechte Druckspannungen eingerollt werden. Zum Beispiel kann der erste Federarm 7 einen größeren Querschnitt als der zweite Federarm 7 aufweisen, so dass die erste Kraft $F_1$ größer ist als die zweite Kraft $F_2$ ($F_1 > F_2$) und der erste definierte Druck größer als der zweite definierte Druck ist. Dadurch kann beispielsweise die Dauerfestigkeit weiter erhöht werden.

Durch die Verwendung eines zangenartigen Bauteils können auch bei einem Käfig mit den mehreren Käfigringen 1, die über Stege 2 verbunden sind, die inneren Käfigringe 1 erreicht werden, da die äußeren Käfigringe 1 in der Ausnehmung des zangenförmigen Bauteils Platz finden.

Mit Doppelrollen können also unterschiedliche Druckspannungen am Außendurchmesser (außenliegende Fläche) und in der Bohrung (innenliegende Fläche) erzeugt werden, wenn die Federarme 7 entsprechend gestaltet sind. Bei bestimmten Anwendungen kann es beispielsweise erforderlich sein (um hohe Dauerfestigkeiten zu erreichen), dass z.B. in der Bohrung (an der innenliegenden Fläche) und beim Übergang 3a (von dem Käfigring auf den Käfigsteg) höhere Druckspannungen erforderlich sind (aufgebracht werden) als am Außendurchmesser (der außenliegenden Fläche).

Alternativ kann auf die in radialer Richtung innenliegende Fläche und die in radialer Richtung außenliegende Fläche auch der gleiche definierte Druck ($F_1 = F_2$) aufgebracht werden. Dadurch können auch sehr dünnwandige Käfige (z.B. Nadellagerkäfige oder Blechkäfige für Rollen- und Kugellager aus Al (Aluminium), Ms (Messing), St (Stahl)) mit diesem zangenförmigen Doppeldruckrollenhalter (Fig. 8) an den betreffenden Ringoberflächen verdichtet werden. Durch das Einwirken gleicher Kräfte von innen und außen kann eine Verformung des Käfigs in radialer Richtung vermieden werden. Lediglich die Kräfte in Umfangsrichtung und Axialrichtung müssen z.B. von dem dünnwandigen Käfig übertragen werden. Bei dünnwandigen Käfigen kann es empfehlenswert sein, das Einbringen der Taschen nach dem Verrollen durchzuführen.

Bei dem Werkzeug aus Fig. 8 (Doppeldruckrollenhalter) können die Käfigringe beispielsweise zweimal überrollt werden (beim Überrollen nach links und beim Zurückziehen des Werkzeugs), dies gilt sowohl für $F_1 > F_2$ als auch umgekehrt und auch für $F_1 = F_2$.

Allgemein gilt, dass durch das Aufbringen des definierten Drucks eine Glättung der Oberfläche erfolgen kann. Dadurch kann die Gefahr der Rissentstehung reduziert werden und eine Erhöhung der Gleitgeschwindigkeiten möglich sein. Ferner kann die Flächenpressung und die Reibung reduziert werden.

In anderen Worten, der definierte Druck kann beispielsweise so gewählt werden, dass eine mittlere Rauheit $R_a$ von weniger als 1 $\mu$m (oder weniger als 0,8 $\mu$m, 0,5 $\mu$m oder 0,3 $\mu$m) für die in radialer Richtung innenliegende und/oder die in radiale Richtung außenliegende Fläche des Käfigrings erreicht werden kann.

Die in radialer Richtung innenliegende Fläche und die in radialer Richtung außenliegende Fläche sind meist parallel zur Rotationsachse des Käfigs im Betrieb, jedoch gibt es auch Bautypen, wie z.B. das Schrägkugellager, bei dem diese Flächen nicht parallel zur Rotationsachse sind. Allgemein ist beispielsweise die in radialer Richtung innenliegende Fläche des Käfigrings im Wesentlichen den Innenring des Wälzlagers zugewandt und die in radialer Richtung außenliegende Fläche im Wesentlichen dem Außenring des Wälzlagers zugewandt.

Das beschriebene Verfahren kann beispielsweise bei Wälzlagern mit Massivkäfigen (z.B. Stahl, Messing, Aluminium, Leichtmetall) eingesetzt werden. Mögliche Wälzlagertypen sind z.B. Zylinderrollenlager, Kegelrollenlager, Kugellager, Vierpunktlager, Pendelrollenlager oder Schrägkugellager.

Einige Ausführungsbeispiele beziehen sich auf einen Käfig, der durch ein Verfahren zur Herstellung eines Wälzlagerkäfigs entsprechend des beschriebenen Konzepts hergestellt wurde. Notwendige, optionale, alternative oder zusätzliche Merkmale des Käfigs entsprechen dabei jenen im Zusammenhang mit dem Verfahren beschriebenen Möglichkeiten.

Einige Ausführungsbeispiele beziehen sich auf Druckspannungen im oberflächennahen Bereich und eine Glättung der Oberfläche von Käfigringen. Eine Druckspannung im oberflächennahen Bereich eines beschriebenen Käfigrings, die geringfügig über den auftretenden Zugspannungen eines Käfigs liegt, kann dazu führen, dass im beschriebenen Käfigring keine (oder nahezu keine) Zugspannungen auftreten, was zur Erhöhung der Dauerfestigkeit führen kann. Die Glättung der Oberflächen kann zusätzlich die Gefahr der Rissentstehung reduzieren. Die Glättung der Führungsflächen (der in radialer Richtung innenliegenden Fläche und der in radialer Richtung außenliegenden Fläche) kann die Reibung zwischen Käfig und Führungsringfläche reduzieren. Dadurch können auch höhere Gleitgeschwindigkeiten und Flächenpressungen ermöglicht werden. Es kann beispielsweise eine glattere Oberfläche erreicht werden, als mit Strahlbehandlung.

Die Dauerfestigkeit kann durch bekannte Dauerfestigkeitsversuche ermittelt werden. Dazu wird eine Wöhlerkurve von einem Standardkäfig erstellt. Danach wird eine Wöhlerkurve von einem nach dem beschriebenen Konzept hergestellten Käfig mit den gleichen Belastungen, die für den Standardkäfig verwendet wurden, erzeugt. Der Eintrag beider Wöhlerkurven in ein Diagramm zeigt die Verbesserung durch die Verdichtung des Materials und durch die Glättung der Käfigringe am Innen- und Außendurchmesser.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

**Bezugszeichenliste**

| 1 | Käfigring |
|---|---|
| 2 | Käfigsteg |
| 3 | Druckspannungsverlauf |
| 3a | Druckspannungsverlauf im Übergang von Käfigring auf Käfigsteg |
| 4 | Druckrolle |
| 5 | Kalibrierwerkzeug |
| 6 | Anschlag |
| 7 | Federarm |
| 100 | Verfahren zur Herstellung eines Wälzlagerkäfigs |
| 110 | Bereitstellen eines Wälzlagerkäfigs |
| 120 | Aufbringen eines definierten Drucks |

**Patentansprüche**

1. Verfahren (100) zur Herstellung eines Wälzlagerkäfigs mit zumindest einem Käfigring und einer Mehrzahl von Käfigstegen, die sich an den Käfigring anschließen, mit folgenden Schritten:

   Bereitstellen (110) eines zumindest teilweise ausgeformten Wälzlagerkäfigs; und **gekennzeichnet durch** ein
   Aufbringen (120) eines definierten Drucks auf eine in radialer Richtung innenliegende und/oder eine in radialer Richtung außenliegende Fläche des Käfigrings, um ein Material des Käfigrings in einem oberflächennahen Bereich zu verdichten.

2. Verfahren gemäß Anspruch 1, **gekennzeichnet dadurch, dass** das Aufbringen des definierten Drucks durch zumindest eine Druckrolle erfolgt, die mit dem definierten Druck über die in radialer Richtung innenliegende und/oder die in radialer Richtung außenliegende Fläche des Käfigrings rollt.

3. Verfahren gemäß Anspruch 2, **gekennzeichnet dadurch, dass** die zumindest eine Druckrolle in Bezug auf den Käfig bei dem Aufbringen des definierten Drucks im Wesentlichen ausgerichtet ist, sodass sich die Rotationsachse der Druckrolle mit der Rotationsachse des Käfigs schneidet oder die Rotationsachse der Druckrolle zu der Rotationsachse des Käfigs parallel verläuft.

**4.** Verfahren gemäß Anspruch 2 oder 3, **gekennzeichnet dadurch, dass** die zumindest eine Druckrolle bei dem Aufbringen des definierten Drucks im Wesentlichen mit konstantem Druck entlang des Umfangs der Fläche des Käfigrings rollt.

**5.** Verfahren gemäß einem der Ansprüche 2 bis 4, **gekennzeichnet dadurch, dass** sich die zumindest eine Druckrolle bei dem Aufbringen des definierten Drucks mit einer tangentialen Geschwindigkeit entlang des Umfangs der Fläche des Käfigrings bewegt und sich dabei mit einer axialen Geschwindigkeit über die Fläche des Käfigrings in Richtung der sich anschließenden Käfigstege bewegt, wobei die tangentiale Geschwindigkeit größer ist als die axiale Geschwindigkeit.

**6.** Verfahren gemäß einem der Ansprüche 2 bis 5, **gekennzeichnet dadurch, dass** für jeden Käfigring des Käfigs zumindest eine Druckrolle für die in radialer Richtung innenliegende Fläche und zumindest eine Druckrolle für die in radialer Richtung außenliegende Fläche verwendet wird, um einen gleichen oder unterschiedlichen definierten Druck auf die Flächen aufzubringen.

**7.** Verfahren gemäß einem der Ansprüche 2 bis 6, **gekennzeichnet dadurch, dass** eine Druckrolle auf die in radialer Richtung innenliegende Fläche einen höheren definierten Druck aufbringt als eine andere Druckrolle auf die in radialer Richtung außenliegende Fläche aufbringt.

**8.** Verfahren gemäß einem der Ansprüche 2 bis 7, **gekennzeichnet dadurch, dass** eine den vordefinierten Druck ausübende Oberfläche der Druckrolle aus Metall, insbesondere aus gehärtetem Stahl, besteht.

**9.** Verfahren gemäß Anspruch 1, **gekennzeichnet dadurch, dass** das Aufbringen des definierten Drucks durch ein Überschieben eines zangenartigen Kalibrierwerkzeugs über die in radialer Richtung innenliegende Fläche und die in radialer Richtung außenliegende Fläche erfolgt, wobei das zangenartige Kalibrierwerkzeug zwei sich gegenüberliegende Gleitflächen mit einem ersten radialen Abstand aufweist und die in radialer Richtung innenliegende Fläche und die in radialer Richtung außenliegende Fläche des Käfigrings einen zweiten radialen Abstand aufweisen, wobei der erste radiale Abstand kleiner ist als der zweite radiale Abstand, sodass beim Überschieben des zangenartigen Kalibrierwerkzeugs über die in radialer Richtung innenliegende Fläche und die in radialer Richtung außenliegende Fläche der definierte Druck aufgebracht wird.

**10.** Verfahren gemäß Anspruch 9, **gekennzeichnet dadurch, dass** das zangenartige Kalibrierwerkzeug einen zylinderförmigen Innenbereich mit einer inneren Gleitfläche und einen hohlzylinderförmigen Außenbereich mit einer äußeren Gleitfläche aufweist, sodass zwischen dem Innenbereich und dem Außenbereich ein Hohlraum gebildet ist, um den Käfig beim Überschieben des zangenartigen Kalibrierwerkzeugs zumindest teilweise aufzunehmen, wobei die innere Gleitfläche beim Überschieben des zangenartigen Kalibrierwerkzeugs über die in radialer Richtung innenliegende Fläche gleitet und die äußere Gleitfläche beim Überschieben des zangenartigen Kalibrierwerkzeugs über die in radialer Richtung außenliegende Fläche gleitet.

*100*

~ *110*

~ *120*

FIG. 1

FIG. 2

FIG. 3

FIG.4

EP 2 711 570 A2

FIG. 5

FIG. 6

FIG. 7

FIG. 8

FIG. 9